Europäisches Patentamt

European Patent Office

Office européen des brevets

(11) Veröffentlichungsnummer: **0 214 288 B1**

(12) **EUROPÄISCHE PATENTSCHRIFT**

(45) Veröffentlichungstag der Patentschrift: **29.08.90**

(21) Anmeldenummer: **86902358.0**

(22) Anmeldetag: **01.03.86**

(86) Internationale Anmeldenummer:
**PCT/EP86/00104**

(87) Internationale Veröffentlichungsnummer:
**WO 86/05631 25.09.86 Gazette 86/21**

(51) Int. Cl.⁵: **H 01 S 3/10,** G 02 B 26/04,
**H 01 S 3/121**

(54) **ANORDNUNG UND VERFAHREN ZUR SCHNELLEN UMSCHALTUNG ZWISCHEN VERSCHIEDENEN WELLENLÄNGEN EINES LASERS.**

(30) Priorität: **12.03.85 DE 3508707**

(43) Veröffentlichungstag der Anmeldung:
**18.03.87 Patentblatt 87/12**

(45) Bekanntmachung des Hinweises auf die
Patenterteilung:
**29.08.90 Patentblatt 90/35**

(84) Benannte Vertragsstaaten:
**AT BE CH DE FR GB IT LI LU NL SE**

(56) Entgegenhaltungen:
**EP-A-0 118 057
DE-A-3 335 317
FR-A-2 245 108
US-A-3 872 407
US-A-4 425 648**

(73) Patentinhaber: **Battelle-Institut e.V.
Am Römerhof 35 Postfach 900 160
D-6000 Frankfurt/Main 90 (DE)**

(72) Erfinder: **ENDEMANN, Martin
Danneckerstrasse 16
D-6000 Frankfurt/Main 70 (DE)**
Erfinder: **HOEFFGEN, Hansjürgen
Königswinterer Strasse 719
D-5300 Bonn (DE)**

(74) Vertreter: **Sartorius, Peter, Dipl.-Ing.
Battelle-Institut e.V. Abteilung Patente Am
Römerhof 35
D-6000 Frankfurt am Main 90 (DE)**

**Beschreibung**

Die Erfindung betrifft eine Anordnung zur vergleichsweise schnellen Änderung der Wellenlänge eines Lasers mit einem im Strahlengang des Lichts im Laserresonator angeordneten rotierenden Spiegel, durch den ein Gitter ansteuerbar ist, wobei über die Änderung des Einfallwinkels des Lichts auf das Gitter die gewünschte Wellenlänge einstellbar ist. Außerdem bezieht sich die Erfindung auf ein Verfahren zum vergleichsweise schnellen Ändern der Wellenlänge eines gepulsten Lasers mit einem im Strahlengang des Lichts im Laserresonator angeordneten beweglichen Kippspiegel, durch den ein Gitter angesteuert wird, wobei über die Änderung des Einfallwinkels des Lichts auf das Gitter die gewünschte Wellenlänge eingestellt wird.

Laser mit einer schnellen Abstimmung zwischen zwei Wellenlängen werden in einer vielzahl von Anwendungen eingesetzt, z.B. auch bei der Fernmessung von Schadstoffen mit Pulslasern mit Hilfe der differentiellen Absorptionstechnik. Der zeitliche Abstand der Laserpulse mit den zwei verschiedenen Wellenlängen sollte dabei zwischen einer und 10 Millisekunden liegen.

Bekannt ist für die schnelle Abstimmung die Verwendung eines Gitters, das mit konstanter Winkelgeschwindigkeit im Resonator eines gepulsten Lasers rotiert. Im Verlauf einer Rotationsperiode durchfährt das Gitter alle möglichen Winkelstellungen, die die Emissionsfrequenz des Lasers bestimmen. Die gewünschte Laserfrequenz kann nun dadurch eingestellt werden, daß der Laser genau zu dem Zeitpunkt gezündet wird, in dem die Winkelstellung des rotierenden Gitters richtig ist. Somit besteht völlige Freiheit in der Auswahl der Laserfrequenzen bei jedem Laserpuls. Bei schnellgepulsten Lasern kann die Frequenz von aufeinander folgenden Pulsen beliebig bestimmt werden.

Statt eines rotierenden Gitters wird häufig auch ein Drehspiegel oder ein rotierender Polygonspiegel verwendet, um das Gitter anzusteuern. Dies zeigt z.B. die DE-A-3 335 317, die eine Anordnung mit den Merkmalen des Oberbegriffs von Patentanspruch 1 beschreibt.

Ein mit konstanter Amplitude schwingender Ablenkspiegel kann die gleiche Funktion erfüllen.

Bei Pulsfolgefrequenzen von ca. 100 bis 1000 Pulsen pro Sekunde ergeben sich recht hohe Rotationsgeschwindigkeiten des Gitters oder Umlenkspiegels. Daraus folgt, daß der Zeitpunkt der Laserzündung mit sehr geringen Toleranzen, typischerweise ca. 0,1 Mikrosekunden, eingehalten werden muß. Diese Genauigkeit bedingt aufwendige Kontrolleinrichtungen und verursacht insbesondere bei gepulsten $CO_2$-Lasern erhebliche technologische Probleme, die die Abstimmgenauigkeit vermindern und auch die Richtung des emittierten Strahls leicht verändern können.

Die US-A-3,872,407 beschreibt ein Verfahren mit den Merkmalen des Oberbegriffs von Patentanspruch 5. Dort wird mit einer festen Amplitude der Auslenkung des Kippspiegels gearbeitet.

Die FR-A-22 45 108 beschreibt eine Anordnung ähnlich derjenigen der DE-A-3 335 317, wobei eine angetriebene Lochscheibe in den Strahlengängen hinter einem halbdurchlässigen Spiegel angeordnet ist. Die Lochscheibe dient dort dazu, die Strahlen ein- bzw. auszuschalten, ohne diese zu reflektieren oder zu versetzen.

Die EP-A-118 057 beschreibt eine mit ausgedehnten Strahlenbündeln arbeitende Vorrichtung, die zur Umschaltung zwischen zwei optischen Gesichtsfeldern dient. Hierzu ist eingangsseitig ein auf Drehung angetriebener Spiegel mit abwechselnd transparenten bzw. reflektierenden Segmenten vorgesehen, mit dessen Hilfe alternierend zwei ihm zugeleitete Lichtbündel zu einem gemeinsamen Detektor gelenkt werden.

Ausgehend von einer Anordnung bzw. einem Verfahren mit den eingangs genannten Merkmalen liegt der Erfindung die Aufgabe zugrunde, eine einfach realisierbare Anordnung bzw. ein einfach realisierbares Verfahren zu schaffen, mit denen ohne Beeinflussing der Abstimmgenauigkeit oder der Strahlenjustierung zwischen verschiedenen Wellenlängen schnell umgeschaltet werden kann.

Diese Aufgabe wird bei der erfindungsgemäßen Anordnung dadurch gelöst, daß der rotierende Spiegel mit Durchbrechungen versehen ist und das Licht alternierend auf das Gitter und ein zweites Gitter oder mindestens einen zweiten Spiegel fällt.

Der Spiegel kann in Form eines Flügelrads, einer gelochten Scheibe oder eines durchsichtigen, stellenweise verspiegelten Substrats ausgebildet sein.

In diesem Falle wird es bevorzugt, wenn die Flächen des Flügelrad-Spiegels geneigt sind.

Bei einem gepulsten Laser wird es bevorzugt, wenn der Abstand zwischen zwei Durchbrüchen des Spiegels entsprechend der Pulsfolgefrequenz und unter Berücksichtigung der Rotationsgeschwindigkeit des Spiegels gewählt ist.

Ist beispielsweise ein rotierender Lochspiegel vorgesehen, so läßt dieser den Laserstrahl im Resonator alternierend durch bzw. lenkt diesen ab.

Die beiden so entstehenden Resonatorarme enthalten Abstimmelemente wie z.B. Gitter, die einzeln auf verschiedene Wellenlängen gestellt werden können. Da der Lochspiegel den Laserstrahl nur unterbricht oder reflektiert, treten auch keine kritischen Toleranzen zur Zündung des Lasers auf.

Der Lochspiegel selber kann aus mehreren Segmenten bestehen, um so die erforderliche Drehgeschwindigkeit herabzusetzen. Bei einer gewünschten Abstimmfrequenz von z.B. 1000 Hertz und einem Spiegelrad mit fünf Segmenten und entsprechend vielen Durchbrüchen beträgt die erforderliche Drehfrequenz des Spiegels 6000 U/min. Diese Drehgeschwindigkeit kann ohne Schwierigkeiten erreicht werden. Mit entsprechender Auswuchtung kann ein vibrationsfreier Lauf erreicht werden, so daß diese Abstimmvorrichtung die übrigen Komponenten des Laserresonators nicht beeinflußt.

Das erfindungsgemäße Verfahren ist zur Lösung der erwähnten Aufgabe dadurch gekennzeichnet, daß der Kippspiegel mit konstanter Frequenz und variabler Amplitude angesteuert wird und daß der Laser jeweils in den Umkehrpunkten gezündet wird. Der Kippspiegel wird also so angesteuert, daß die gewünschten Wellenlängen dann eingestellt sind, wenn sich der Spiegel in den Umkehrpunkten befindet. Das erfordert eine Ansteuerung des Schwingspiegels mit konstanter Frequenz und variabler Amplitude. Die Steuerung der Amplitudenhöhe kann ohne besondere Schwierigkeiten durchgeführt werden. Da sich der Kippspiegel (Schwingspiegel) in den Umlenkpunkten nur langsam bewegt, ergibt sich in dieser Anordnung eine deutliche Reduzierung der erforderlichen Genauigkeit des Zündzeitpunkts auf Werte zwischen 10 und 100 Mikrosekunden. Eine solche Genauigkeit läßt sich auch mit gepulsten $CO_2$-Lasern ohne besonderen Aufwand erreichen.

Die Erfindung wird anhand der schematischen Zeichnung näher erläutert. Es zeigen:

Fig. 1 eine Anordnung mit einem Chopperspiegel und zwei Gittern;

Fig. 2 verschiedene Ausführungsformen für den durchbrochenen Spiegel und

Fig. 3 die Funktionsweise des Kippspiegels.

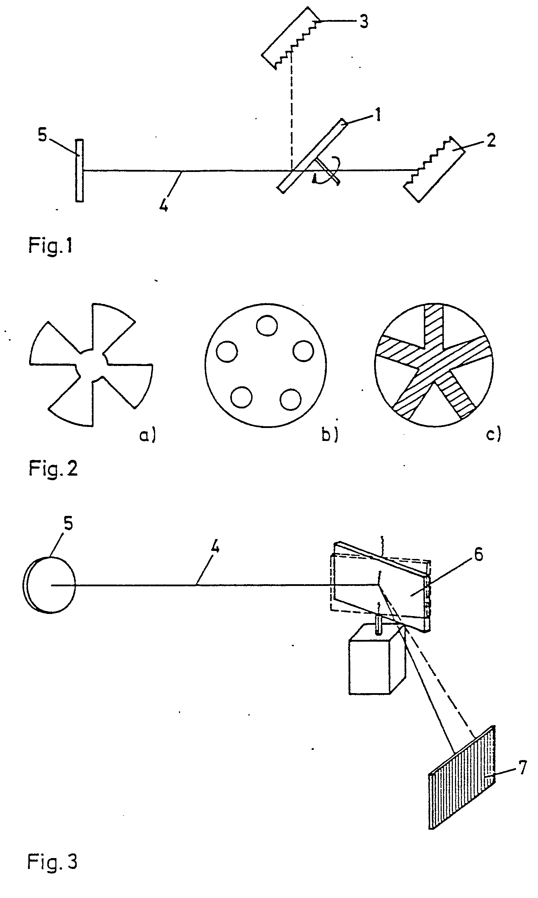

In der Ausführungsform gemäß Fig. 1 wird ein durchbrochener, in Pfeilrichtung rotierender Spiegel 1, in diesem Fall in Form eines Flügelrades, in den Laserresonator eingebaut. Der Winkel unter dem der Spiegel 1 befestigt wird, ist frei wählbar. Zwei Gitter 2 und 3 werden relativ zu dem Spiegel 1 angebracht.

Befindet sich nun keine reflektierende Fläche im Strahlenweg 4, so wird der Laserresonator durch den Spiegel 1, das Gitter 2 und den Laserendspiegel 5 gebildet. Befindet sich ein Spiegelsegment im Strahlenweg 4, so wird der Resonator durch den Spiegel 1 und das Gitter 3 gebildet. Sowohl Gitter 2 als auch Gitter 3 können durch einen Steuerspiegel ersetzt werden, der das Licht zu dem dann vorhandenen Gitter 2 oder 3 ablenkt.

Der durchbrochene Spiegel kann auf verschiedene Weise realisiert werden. Einige Ausführungsformen sind in Fig. 2 dargestellt. Aus einem runden Spiegel können z.B. Stücke so herausgeschnitten werden, daß ein Flügelrad entsteht (Fig. 2 a). Durch die Anordnung von Löchern, beispielsweise durch Bohren, ist ein durchbrochener Spiegel ebenfalls herstellbar (Fig. 2 b). Ein durchsichtiges Substrat kann stellenweise verspiegelt werden (Fig. 2 c). Man kann auch auf einer Lochscheibe Spiegelsegmente befestigen. Spiegelsegmente können dabei unter verschiedenen Winkeln auf die Lochscheibe aufgebracht werden, so daß das Licht auf das entsprechende Gitter unter verschiedenen Winkeln auftritt. Der durchbrochene Spiegel kann auch direkt als Metallspiegel hergestellt werden, z. B. aus Kupfer oder Aluminium. Der Anzahl der Löcher bzw. Spiegelflächen kann dem entsprechenden Anwendungsfall angepaßt werden.

Bei Verwendung eines Kippspiegels 6, wie in Fig. 3 gezeigt, wird dieser im Strahlengang so angeordnet, daß das Licht unter verschiedenen Winkeln auf das Gitter (7) trifft.

## Patentansprüche

1. Anordnung zur vergleichsweise schnellen Änderung der Wellenlänge eines Lasers mit einem im Strahlengang des Lichts im Laserresonator angeordneten rotierenden Spiegel (1), durch den ein Gitter (3) ansteuerbar ist, wobei über die Änderung des Einfallwinkels des Lichts auf das Gitter die gewünschte Wellenlänge einstellbar ist, dadurch gekennzeichnet, daß der rotierende Spiegel (1) mit Durchbrechungen versehen ist und das Licht alternierend auf das Gitter (3) und ein zweites Gitter (2) oder einen zweiten Spiegel fällt.

2. Anordnung nach Anspruch 1, dadurch gekennzeichnet, daß der Spiegel (1) in Form eines Flügelrades, einer gelochten Scheibe oder eines durchsichtigen, stellenweise verspiegelten Substrats ausgebildet ist.

3. Anordnung nach Anspruch 2, dadurch gekennzeichnet, daß die Flächen des Flügelrad-Spiegels (1) geneigt sind.

4. Anordnung nach einem der Ansprüche 1 bis 3 bei gepulsten Lasern, dadurch gekennzeichnet, daß bei einem gepulsten Laser der Abstand zwischen zwei Durchbrüchen des Spiegels (1) entsprechend der Pulsfolgefrequenz und unter Berücksichtigung der Rotationsgeschwindigkeit des Spiegels gewählt wird.

5. Verfahren zum vergleichsweise schnellen Ändern der Wellenlänge eines gepulsten Lasers mit einem im Strahlengang des Lichts im Laserresonator angeordneten beweglichen Kippspiegel (6), durch den ein Gitter (7) angesteuert wird, wobei über die Änderung des Einfallwinkels des Lichts auf das Gitter (7) die gewünschte Wellenlänge eingestellt wird, dadurch gekennzeichnet, daß der Kippspiegel (6) mit konstanter Frequenz und variabler Amplitude angesteuert wird und daß der Laser jeweils in den Umkehrpunkten gezündet wird.

## Revendications

1. Dispositif pour modifier relativement rapidement la longueur d'onde d'un laser avec un miroir tournant (1) disposé dans le résonateur laser sur le trajet du faisceau de lumière, miroir grâce auquel une grille (3) est susceptible d'être commandée, la longueur d'onde souhaitée pouvant être réglée par modification de l'angle d'incidence de la lumière sur la grille, dispositif caractérisé en ce que le miroir tournant (1) est ajouré, et la lumière tombe alternativement sur la grille (3) et sur une seconde grille (2) ou un second miroir.

2. Dispositif selon la revendication 1, caractérisé en ce que le miroir (1) est réalisé sous la forme d'une roue à ailettes, d'un disque troué, ou d'un substrat transparent métallisé par endroits.

3. Dispositif selon la revendication 2, caractérisé en ce que les surfaces du miroir (1) en forme de roue à ailettes sont inclinées;.

4. Dispositif selon l'une quelconque des revendications 1 à 3, dans le cas de lasers en régime pulsé, caractérisé en ce que, dans le cas d'un laser en régime pulsé, l'intervalle entre deux ajours du miroir (1) est choisi en fonction de la fréquence des successions d'impulsions et en tenant compte de la vitesse de rotation du miroir.

5. Procédé pour modifier relativement rapidement la longueur d'onde d'un laser en régime pulsé avec un miroir basculant mobile (6) disposé dans le résonateur du laser sur le trajet du faisceau de lumière, miroir grâce auquel une grille (7) est susceptible d'être commandée, la longueur d'onde souhaitée étant réglée par modification de l'angle d'incidence de la lumière sur la grille (7), procédé caractérisé en ce que le miroir basculant (6) est commandé avec une fréquence constante et une amplitude variable et que le laser est respectivement activé aux points d'inversion.

**Claims**

1. Device for the comparatively fast variation of the wavelength of a laser, with a rotating mirror (1) provided in the optical path of the light in the laser resonator, by means of which mirror a grating (3) can be triggered, the desired wavelength being adjustable by varying the angle of incidence of the light on the grating, comprising: the rotating mirror (1) being provided with apertures and the light being incident alternately on the grating (3) and on a second grating (2) or on a second mirror.

2. Device as claimed in Claim 1, wherein the mirror (1) is shaped like an impeller wheel, a perforated disc or a transparent, partly reflecting substrate.

3. Device as claimed in Claim 2, wherein the faces of the impeller-wheel mirror (1) are inclined.

4. Device as claimed in any of Claims 1 to 3 for pulsed lasers, wherein the distance between two apertures of the mirror (1) of a pulsed laser is selected according to the pulse repetition frequency, taking into account the speed of rotation of the mirror.

5. Method for the comparatively fast variation of the wavelength of a pulsed laser with a movable tilting mirror (6) provided in the optical path of the light in the laser resonator, said mirror being used to reflect the light to a grating (7), the desired wavelength being adjusted by varying the angle of incidence of the light on the grating (7), wherein the tilting mirror (6) oscillates at constant frequency and variable amplitude, and the laser is triggered at the reversal points.

EP 0 214 288 B1

Fig.1

a)          b)          c)

Fig.2

Fig.3

1